# EUROPEAN PATENT APPLICATION

(11) **EP 3 961 888 A1**
(43) Date of publication of application: **02.03.2022**
(21) Application number: 21193402.1
(22) Date of filing: 26.08.2021
(51) Int. Cl.: H02M 1/00, H02M 3/335

(54) **POWER SUPPLY UNIT WITH DYNAMICALLY CONFIGURABLE POWER DISTRIBUTION**

(30) Priority: 28.08.2020 US 202063071671 P
(71) Applicant: ARRIS Enterprises LLC, Suwanee, GA 30024 (US)
(72) Inventor: LEE, Michael, Sunnyvale (US)
(74) Representative: Openshaw & Co.

(57) **Abstract**

A PSU that dynamically allocates power for different output rails is described. This PSU may include: an input node that electrically couples to an input power; a bridge circuit electrically coupled to a primary winding of a transformer; a first load circuit that provides a first output rail and a second load circuit that provides a second output rail, where the first load circuit and the second load circuit are electrically coupled to secondary windings of the transformer; a control node that receives a control signal; and a control circuit, electrically coupled to the control node and the first load circuit and the second load circuit, that dynamically adjusts power configurations of the first load circuit and the second load circuit. Note that a given power configuration may specify a given output power rating of a given output rail of a given load circuit.

## Description

### FIELD

The described embodiments relate to a power supply unit (PSU). Notably, the described embodiments relate to a PSU that has a flexible output power range and a dynamically configurable power distribution.

### BACKGROUND

Many electronic devices include a PSU that converts or steps down the mains alternating current (AC) input power into a low-voltage regulated direct current (DC) output power for the internal components or load. In principle, a single PSU can be used to provide multiple low-voltage regulated DC power outputs by using separate DC-to-DC converters to step down the single PSU output power. However, the use of multiple DC-to-DC converters is expensive and the conversions process is often inefficient, which results in power loss.

Alternatively, a bulk PSU may be designed with a fixed power rating for each output rail. For example, a single-output PSU may provide a fixed output power, while a dual-output PSU may provide two fixed output powers.

However, because of safety requirements, these output power ratings or specifications are usually the maximum output powers available for the different output rails. Consequently, if the output power for one of the output rails is not fully used and the other output rail needs more output power, the PSU typically cannot be used in this application. Instead, this application often requires a new PSU be designed with the correct power distribution, which is usually expensive.

### SUMMARY

A PSU that dynamically allocates power for different output rails is described. This PSU may include: an input node that electrically couples to an input power signal; a bridge circuit electrically coupled to the input node and a primary winding of a transformer; the transformer having the primary winding, a first secondary winding and a second secondary winding; a first load circuit that provides a first output rail and a second load circuit that provides a second output rail, where the first load circuit is electrically coupled to the first secondary winding, and the second load circuit is electrically coupled to the second secondary winding; a control node that receives a control signal; and a control circuit, electrically coupled to the control node, the first load circuit and the second load circuit, that dynamically adjusts power configurations of the first load circuit and the second load circuit. Note that a given power configuration may specify a given output power rating of a given output rail of a given load circuit.

Moreover, the input power signal may include a mains AC input power.

Furthermore, the PSU may have a combined output power rating, and a sum of a first output power rating of the first load circuit and a second output power rating of the second load circuit may be less than or equal to the combined output power rating.

Additionally, the first output power rating may be adjusted in a first range of output powers, the second output rating may be adjusted in a second range of output powers, and the first range of output powers may, at least in part, overlap with the second range of output powers.

In some embodiments, the control signal may specify the first output power rating and the second output power rating. Moreover, the control signal may specify the combined output power rating. Furthermore, the control signal may be associated with a processor. Alternatively, the control signal may be associated with: a resistive divider, a fuse, an adjustable pull-up or a pull-down circuit, or a fixed strapping circuit.

Note that the PSU may include: a first output circuit, electrically coupled to the first output rail, that monitors an electrical parameter corresponding to a first output power of the first output rail and that limits the first output power to be less than a first maximum output power rating (e.g., by limiting the output current); and a second output circuit, electrically coupled to the second output rail, that monitors an electrical parameter corresponding to a second output power of the second output rail and that limits the second output power to be less than a second maximum output power rating (e.g., by limiting the output current). For example, a given output circuit may use current sense, voltage sense or both.

Another embodiment provides a computer-readable storage medium for use with a PSU. This computer-readable storage medium may include program instructions that, when executed by the PSU, cause the PSU to perform at least some of the aforementioned operations.

Another embodiment provides a method. This method includes at least some of the operations performed by a PSU.

This Summary is provided for purposes of illustrating some exemplary embodiments, so as to provide a basic understanding of some aspects of the subject matter described herein. Accordingly, it will be appreciated that the above-described features are examples and should not be construed to narrow the scope or spirit of the subject matter described herein in any way. Other features, aspects, and advantages of the subject matter described herein will become apparent from the following Detailed Description, Figures, and Claims.

### BRIEF DESCRIPTION OF THE FIGURES

FIG. 1 is a block diagram illustrating an example of an existing single-output power supply unit (PSU).
FIG. 2 is a block diagram illustrating an example of an existing single-output PSU.
FIG. 3 is a block diagram illustrating an example of an existing dual-output PSU.
FIG. 4 is a block diagram illustrating an example of a dual-output PSU in accordance with an embodiment of the present disclosure.
FIG. 5 is a block diagram illustrating an example of a comparison of different dual-output PSUs in accordance with an embodiment of the present disclosure.
FIG. 6 is a flow diagram illustrating an example method for dynamically allocating power for different output rails in the PSU in FIG. 4 in accordance with an embodiment of the present disclosure.
FIG. 7 is a flow diagram illustrating an example method for dynamically allocating power for different output rails in the PSU in FIG. 4 in accordance with an embodiment of the present disclosure.
FIG. 8 is a block diagram illustrating an example of an electronic device that includes the PSU of FIG. 4 in accordance with an embodiment of the present disclosure.

Note that like reference numerals refer to corresponding parts throughout the drawings. Moreover, multiple instances of the same part are designated by a common prefix separated from an instance number by a dash.

### DETAILED DESCRIPTION

A PSU that dynamically allocates power for different output rails is described. This PSU may include: an input node that electrically couples to an input power; a bridge circuit electrically coupled to a primary winding of a transformer; a first load circuit that provides a first output rail and a second load circuit that provides a second output rail, where the first load circuit and the second load circuit are electrically coupled to secondary windings of the transformer; a control node that receives a control signal; and a control circuit, electrically coupled to the control node and the first load circuit and the second load circuit, that dynamically adjusts power configurations of the first load circuit and the second load circuit. Note that a given power configuration may specify a given output power rating of a given output rail of a given load circuit.

By dynamically adjusting the power configurations, these power-supply techniques may provide a PSU with flexible output power ratings for the first output rail and the second output rail. For example, the PSU may dynamically allocate a flexible power budget on-the-fly using software without designing a new PSU for different use cases. Consequently, a single PSU design may be used to fulfill multiple requirements. This may allow this PSU design to be reused in different applications and to adapted to different power conditions in a given application. Therefore, the power-supply techniques may reduce the cost and complexity in developing PSUs for a wide range of applications.

In the discussion that follows, one or more regulation techniques may be used in the PSU (such as in a given load circuit), including: linear regulation, switching, and/or ripple regulated. Moreover, the one or more regulation techniques may be implemented in the analog domain, the digital domain or both. Furthermore, the PSU may be implemented in hardware, software or both.

A single-output PSU is the most common PSU available in the market. As the power consumption of a system increases, PSU suppliers often prefer to use a single-output, high-power PSU design. Moreover, in order to keep the PSU form-factor small, the output voltage may be high to reduce the current and connector size for cost saving.

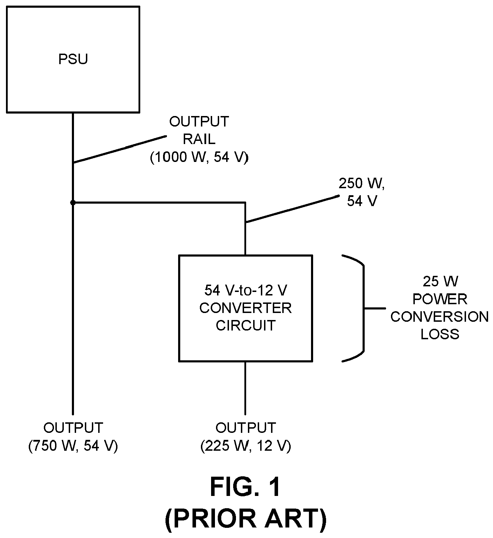

FIG. 1 presents a block diagram illustrating an example of an existing single-output PSU. This single-output 1000 W at 54 V PSU is common in hyperscale data center applications. Note that the 54 V output may be dedicated for the Power-over-Ethernet (PoE) output rail. Usually, this output rail needs 750 W to support 48 ports at 30 W per port. Moreover, a 250 W at 12 V output provided by the conversion circuit may be used for digital system power. In some embodiments, other lower output voltages may be derived from the 12 V output.

One advantage of this PSU design is that it can be re-used in different systems (such as electronic devices or platforms) by changing the conversion circuit for each system. In this way, the same PSU design can be used in different systems. However, in this approach there is a power conversion loss when the one output rail is converted into another output. For example, in FIG. 1 the power conversion loss may be 25 W, which may be transformed into heat. Moreover, in order to operate at high speed, the system printed circuit board (PCB) is usually expensive. Furthermore, the conversion circuit may also use expensive PCB space. Note that the total power consumption may be 1000 W plus 250 W or 1250 W, while the actual output available for use may be 975 W. Consequently, the efficiency is 975/1250 or 78%.

A non-PoE system typically does not require a 54 V output. Instead, a non-PoE PSU output rail may be 1000 W at 12 V. However, with 1000 W power, the 12 V output of the PSU has a large output current. Therefore, the PSU connector size may need to be able to carry a large amount of current. Moreover, a large current usually results in more noise.

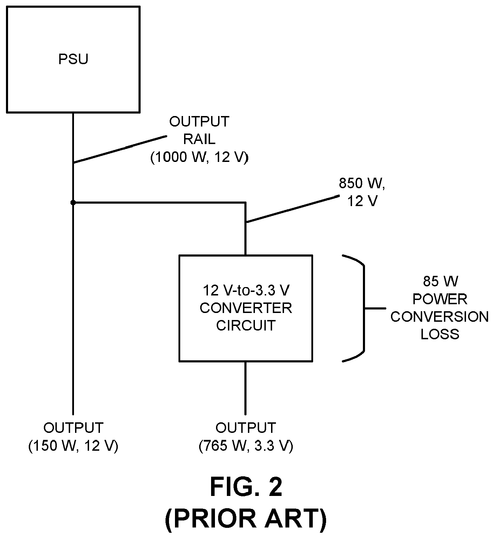

For example, as shown in FIG. 2, which presents a block diagram illustrating an example of an existing single-output PSU, 150 W at 12 V of the output rail from the PSU may be used to power the system fans. Furthermore, other digital circuit outputs may be provided or derived by the conversion circuit from the remaining power (850 W), which is not used by system fans. Notably, a 765 W at 3.3 V output may be provided by the conversion circuit. In this way, once again, the same PSU design may be used in different systems by changing the conversion circuit.

However, as was the case in FIG. 1, in this approach there is a power conversion loss when the one output rail is converted into another output. For example, in FIG. 1 the power conversion loss may be 85 W, which may be transformed into heat. Moreover, in order to operate at high speed, the system PCB is usually expensive. Furthermore, the conversion circuit may also use expensive PCB space. Note that the total power consumption may be 1000 W plus 850 W or 1850 W, while the actual output available for use may be 915 W. Consequently, the efficiency is very low (915/1850 or 52.7%). Thus, in FIGs. 1 and 2, the total power and hardware costs of using a single-output PSU are high.

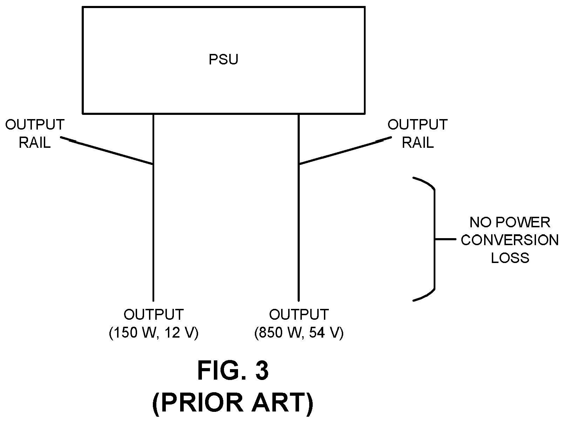

One way to address the hardware-cost problem is to design a dual-output PSU. FIG. 3 presents a block diagram illustrating an example of an existing dual-output PSU. In FIG. 3, a 150 W at 12 V output rail can be used for system, and an 850 W at 54 V output rial can be used for PoE power distribution. In this design, there is no additional power conversion loss. The actual power available for the system is the same as the power rating of the PSU. Consequently, the efficient is 100%. However, in this PSU design the maximum power allocation for each output rail is predetermined and fixed. If a system requires an output rail with 250 W at 12 V, and an output rail with 750 W at 54 V, this PSU cannot be used, because the 54 V PoE output rail is isolated from the 12 V output rail. Moreover, design and qualifying a new PSU is not trivial. It typically takes 6 months to 1 year to design and qualify a new PSU. While FIG. 3 illustrates a particular power configuration, the use of fixed and predetermined powers for each output rail is a common problem in existing PSUs.

In the embodiments of the power-supply techniques, a PSU may dynamically (i.e., on the fly) adjust the maximum output power of a given output rail and, thus, can dynamically adjust the power budget (e.g., using software). Notably, the PSU may be designed so that the output power of each output rail supports a range of output powers, while keeping the sum of the output powers of the output rails less than or equal to the total power consumption of the PSU. This may be achieved by over-designing the PSU hardware so that there is overlap in the range of output powers of the output rails.

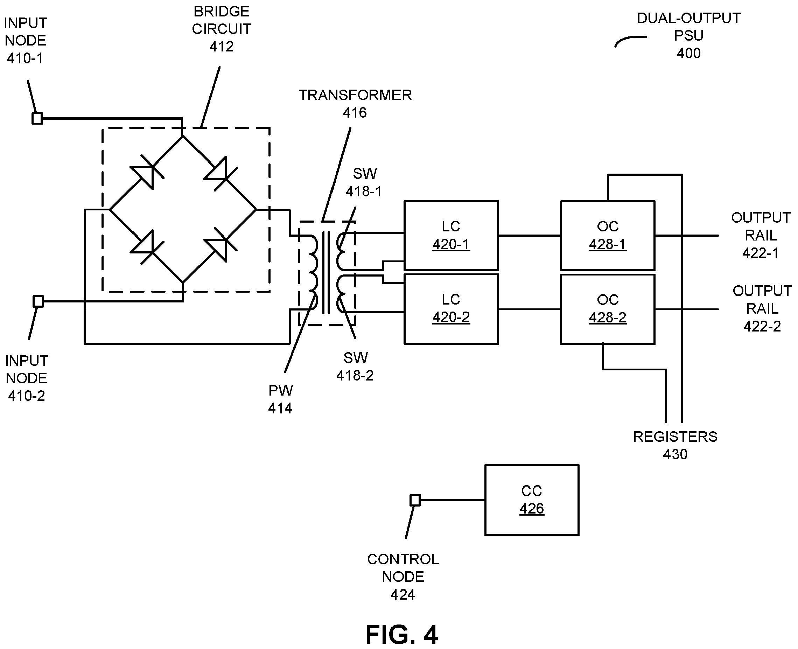

FIG. 4 presents a block diagram illustrating an example of a dual-output PSU 400. This PSU may include: one or more input nodes 410 (or a pad or a connector) that electrically couples to an input power signal (such as a mains AC input power); a bridge circuit 412 (such as a full-wave diode bridge) electrically coupled to the one or more input node(s) 410 and a primary winding (PW) 414 of a transformer 416; and transformer 416 having primary winding 414, a secondary winding (SW) 418-1 and a secondary winding 418-2. Moreover, PSU 400 may include: a load circuit (LC) 420-1, electrically coupled to secondary winding 418-1, that provides an output rail 422-1; and a load circuit 420-2, electrically coupled to secondary winding 418-2, that provides an output rail 422-2. Furthermore, PSU 400 may include: a control node 424 (or a pad or a connector) that receives a control signal; and a control circuit (CC) 426 (or control logic), electrically coupled to control node 424 and load circuits 420, that dynamically adjusts power configurations of load circuits 420. Note that a given power configuration may specify a given output power rating of a given output rail (such as output rail 422-1 or output rail 422-2) of a given load circuit. In FIG. 1, note that the given load circuit is sometimes referred to as a 'regulator circuit' or a 'conversion circuit'.

Moreover, PSU 400 may have a combined (or a total) output power rating (or maximum power), and a sum of a first output power rating of load circuit 420-1 and a second output power rating of load circuit 420-2 may be less than or equal to the combined output power rating. Thus, while the first output power rating and/or the second output power rating may be adjusted, the combined output power rating may be constant or unchanged. Furthermore, the first output power rating may be adjusted in a first range of output powers, the second output rating may be adjusted in a second range of output powers, and the first range of output powers may, at least in part, overlap with the second range of output powers.

Additionally, the control signal may specify the first output power rating and the second output power rating. Moreover, the control signal may specify the combined output power rating. Furthermore, the control signal may be associated with a processor (e.g., a processor in a system or electronic device that includes PSU 400). Alternatively, the control signal may be associated with: a resistive divider, a fuse, an adjustable pull-up or a pull-down circuit, or a fixed strapping circuit. Thus, the control signal may be adjustable or may be fixed.

In some embodiments, PSU 400 may include: an output circuit 428-1, electrically coupled to output rail 422-1, that monitors an electrical parameter (such as voltage, current and/or power) corresponding to a first output power of output rail 422-1 and that limits the first output power to be less than a first maximum output power rating; and an output circuit 428-2, electrically coupled to output rail 422-2, that monitors an electrical parameter (such as current, voltage and/or power) corresponding to a second output power of output rail 422-2 and that limits the second output power to be less than a second maximum output power rating. For example, a given output circuit may use current sense, voltage sense or both, and may be electrically coupled to one of output registers 430. Moreover, output circuits 428 may provide feedback to load circuits 420 and/or a system or electronic device that includes PSU 400, so that the control signal can be adjusted based at least in part on desired or target output powers of output rails 422. Thus, in addition to built-in hardware protection, PSU 400 may include, e.g., output current reading in order to allow PSU 400 (or the system or electronic device that includes PSU 400) to determine and/or adjust (e.g., using software) the maximum output power for output rails 422 in a particular application.

In some embodiments, in PSU 400 output rail 422-1 may be a 54 V output rail that is designed to deliver between 764 and 833 W, and output rail 422-2 may be a 12 V output rail that is designed to deliver between 167 and 236 W. However, the total power output at 54 V and 12 V may be less than or equal to, e.g., 1000 W.

These power-supply techniques may address both the power conversion loss and may allow designers to use the same PSU design in different systems. Notably, PSU 400 may avoid the use of additional external conversion circuits and, thus, may eliminate the additional power conversion loss. In addition, by allowing the output power ratings of output rails 422 to be dynamically adjusted, PSU 400 may be used in a wide variety of systems and applications.

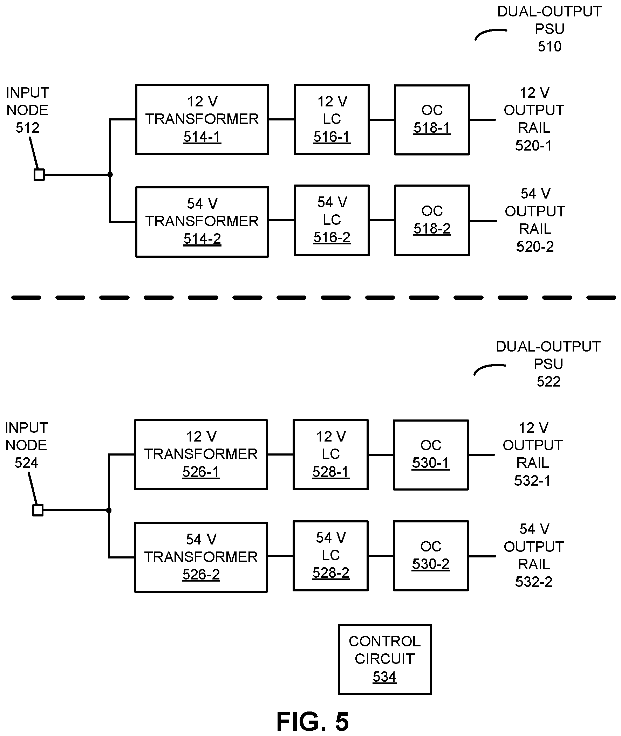

FIG. 5 present a block diagram illustrating an example of a comparison of different dual-output PSUs. Notably, in existing dual-output PSU 510, there may be: an input node 512 (such as an AC input); transformers 514 (such as a 54 V transformer and a 12 V transformer); load circuits 516 (such as a 54 V load circuit with a fixed current rating of 15.74 A plus, e.g., a 10-25% margin, and a 12 V load circuit with a fixed current rating of 12.5 A plus, e.g., a 10-25% margin); output circuits 518 (which may be electrically coupled to output registers); and output rails 520. In PSU 510, unused power allocated for one rail output cannot be redirected to the other rail. For example, if only 120 W is used by a 12 V application, the unused 30 W (150 W - 120 W) cannot be allocated to the 54 V output rail.

Alternatively, in dynamic dual-output PSU 522, there may be: an input node 524 (such as an AC input); transformers 526 (such as a 54 V transformer and a 12 V transformer); dynamic load circuits 528 (such as a 54 V load circuit with a current rating of up to 15.43 A plus, e.g., a 10-25% margin, and a 12 V load circuit with a current rating of up to 19.67 A plus, e.g., a 10-25% margin); output circuits 530 (which may be electrically coupled to output registers); and output rails 532. Note that the maximum current rating of load circuits 528-2 is increased relative to its counterpart (load circuit 516-2). This increase in the maximum current rating (and, more generally, the maximum output power rating) allows PSU 522 to support dynamically adjustable or a flexible range of output powers for output rails 530. Notably, in PSU 522, unused power allocated for one output rail can be redirected by control circuit 534 to the other output rail. For example, if only 167 W is used for the 12 V application, the unused 69 W (833 W - 764 W or 236 W - 167 W) can be reallocated to 54 V output rail 532-2.

In some embodiments, software (such as firmware) in PSU 400 (FIG. 4) or PSU 522 may be modified so that the total power consumption of the PSU does not exceed, e.g., 1000 W for safety protection. For example, the software may read the output registers to adjust the dynamically allocation of 54 V output rail without requiring a new PSU be designed to meet different system needs.

Note that in some embodiments, the disclosed embodiments of the PSU may have output powers that can be adjusted over a larger range of output powers. However, this may increase the cost of the PSU, because the output power of a given output rail may be increased further. In general, increasing the output current rating may require the use of a more expensive component and it can create thermal problem inside the PSU that may exceed a C14 AC input rating.

Although we describe PSU 400 (FIG. 4) and PSU 522 with a particular architecture or configuration, in other embodiments, the PSU may include fewer or additional components, two or more components may be combined, a single component may be divided into two or more components, a given component may be substituted by a different component, and/or positions of one or more components may be changed. Moreover, in some embodiments, a function of a given component may be performed by another components.

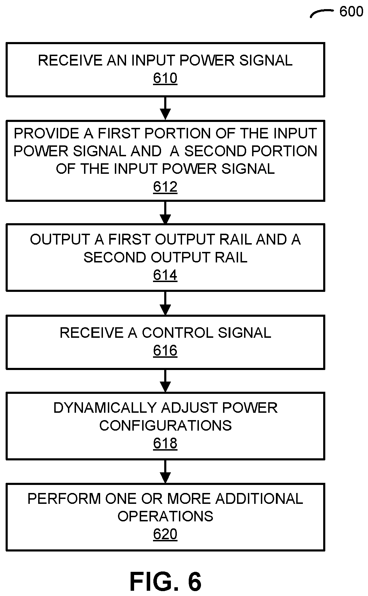

We now describe embodiments of a method. FIG. 6 presents a flow diagram illustrating an example method 600 for dynamically allocating power for different output rails. This method may be performed by a PSU, such as PSU 400 in FIG. 4.

Notably, during operation, the PSU may receive an input power signal (operation 610). Then, the PSU may provide a first portion of the input power signal (operation 612) to a first load circuit and a second portion of the input power signal (operation 612) to a second load circuit. Moreover, the PSU may output a first output rail (operation 614) using the first load circuit and may output a second output rail (operation 614) using the second load circuit.

Next, the PSU may receive a control signal (operation 616). Furthermore, the PSU may dynamically adjust, using a control circuit, power configurations (operation 618) of the first load circuit and the second load circuit, where a given power configuration specifies a given output power rating of a given output rail of a given load circuit.

In some embodiments, the PSU may optionally perform one or more additional operations (operation 620). For example, the PSU may monitor the output rails and provide feedback. Alternatively or additionally, the PSU may limit a maximum output power of a given output rail.

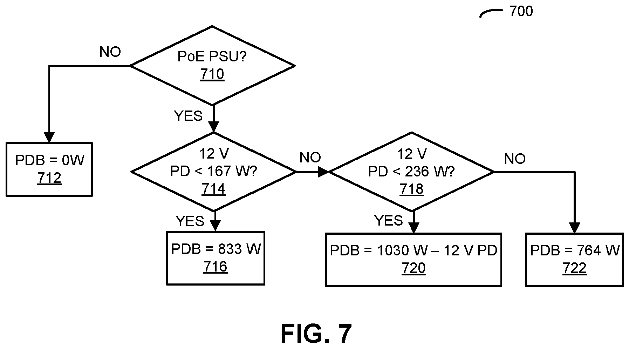

FIG. 7 presents a flow diagram illustrating an example method 700 for dynamically allocating power for different output rails. This method may be performed by a PSU, such as PSU 400 in FIG. 4. This PSU may determine a 54 V PoE power distribution budget by reading a system identifier in order to determine the system 12 V power demand (or receiving the control signal that specifies the system identifier or the system 12 V power demand). Once the 12 V power demand is determined, the system PoE power distribution budget can be determined based at least in part on method 700.

During operation, the PSU may determine whether the PSU is a PoE PSU (operation 710). If not (operation 710), the PoE power distribution budget (PDB) may be 0 W (operation 712). Otherwise (operation 710), the PSU may determine whether the 12 V power demand (PD) is less than 167 W? (operation 714).

If the 12 V power demand is less than 167 W (operation 714), the PoE power distribution budget may be 833 W (operation 716). Otherwise (operation 714), the PSU may determine whether the 12 V power demand is less than 236 W (operation 718).

If the 12 V power demand is less than 236 W (operation 718), the PoE power distribution budget may be 1000 W minus the 12 power demand (operation 720). Otherwise (operation 718), the PoE power distribution budget may be 764 W (operation 722).

In some embodiments of methods 600 (FIG. 6) and/or 700, there may be additional or fewer operations. Moreover, there may be different operations. Furthermore, the order of the operations may be changed, and/or two or more operations may be combined into a single operation.

Note that in the power-supply techniques, one or more of the PSU load circuits may be upgraded to increase the maximum power rating of a given output rail without redesigning the PSU from scratch. Because of the larger currents, the connector current rating, the thermal rating and the software in the PSU may be updated, so that the PSU can pass the safety requirement for recertification. The cost of the PSU may be only slightly increased (e.g., by 5%). However, this approach may offer significant benefits. For example, a 12 V output rail may be increased from 150 W to 236 W. This 86 W from the 12 V output rail may be re-used by the 54 V output rail without power conversion loss.

Once the PSU hardware design is completed, the PSU or the system software can dynamically allocate the 54 V power distribution budget using method 700. In this way, the same PSU design may be reused in different systems that have different 12 V power demand without redesigning the PSU.

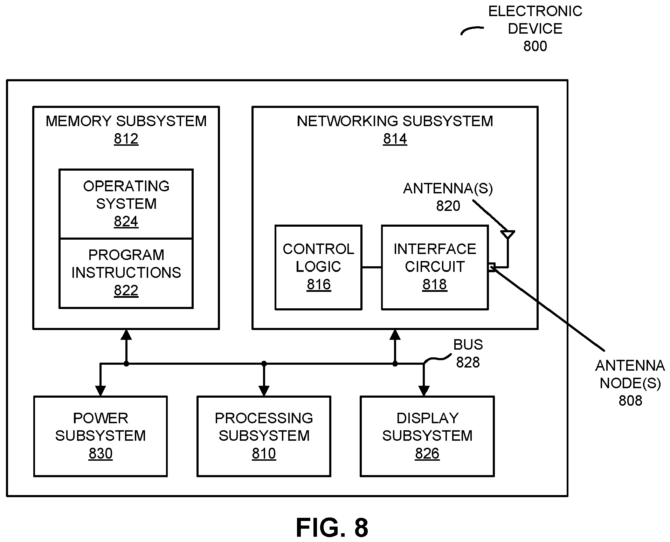

We now describe embodiments of an electronic device, which may include a PSU (such as PSU 400 in FIG. 4). FIG. 8 presents a block diagram illustrating an electronic device 800 in accordance with some embodiments. This electronic device includes processing subsystem 810, memory subsystem 812, and networking subsystem 814. Processing subsystem 810 includes one or more devices configured to perform computational operations. For example, processing subsystem 810 can include one or more microprocessors, ASICs, microcontrollers, programmable-logic devices, graphical processor units (GPUs) and/or one or more digital signal processors (DSPs).

Memory subsystem 812 includes one or more devices for storing data and/or instructions for processing subsystem 810 and networking subsystem 814. For example, memory subsystem 812 can include dynamic random access memory (DRAM), static random access memory (SRAM), and/or other types of memory (which collectively or individually are sometimes referred to as a 'computer-readable storage medium'). In some embodiments, instructions for processing subsystem 810 in memory subsystem 812 include: one or more program modules or sets of instructions (such as program instructions 822 or operating system 824), which may be executed by processing subsystem 810. Note that the one or more computer programs may constitute a computer-program mechanism. Moreover, instructions in the various modules in memory subsystem 812 may be implemented in: a high-level procedural language, an object-oriented programming language, and/or in an assembly or machine language. Furthermore, the programming language may be compiled or interpreted, e.g., configurable or configured (which may be used interchangeably in this discussion), to be executed by processing subsystem 810.

In addition, memory subsystem 812 can include mechanisms for controlling access to the memory. In some embodiments, memory subsystem 812 includes a memory hierarchy that comprises one or more caches coupled to a memory in electronic device 800. In some of these embodiments, one or more of the caches is located in processing subsystem 810.

In some embodiments, memory subsystem 812 is coupled to one or more high-capacity mass-storage devices (not shown). For example, memory subsystem 812 can be coupled to a magnetic or optical drive, a solid-state drive, or another type of mass-storage device. In these embodiments, memory subsystem 812 can be used by electronic device 800 as fast-access storage for often-used data, while the mass-storage device is used to store less frequently used data.

Networking subsystem 814 includes one or more devices configured to couple to and communicate on a wired and/or wireless network (i.e., to perform network operations), including: control logic 816, an interface circuit 818 and one or more antennas 820 (or antenna elements). (While FIG. 8 includes one or more antennas 820, in some embodiments electronic device 800 includes one or more antenna nodes, connectors or pads, such as nodes 808, e.g., an antenna node, a connector or a pad, which can be coupled to the one or more antennas 820. Thus, electronic device 800 may or may not include the one or more antennas 820.) For example, networking subsystem 814 can include a Bluetooth networking system, a cellular networking system (e.g., a 3G/4G/5G network such as UMTS, LTE, etc.), a USB networking system, a networking system based on the standards described in IEEE 802.11 (which is sometimes referred to as 'Wi-Fi^{®},' from the Wi-Fi Alliance of Austin, Texas) e.g., a Wi-Fi networking system, an Ethernet networking system that is compatible with an IEEE 802.3 standard (which is sometimes referred to as 'Ethernet'), e.g., an Ethernet II standard, and/or another networking system. In some embodiments, the IEEE 802.11 standard or communication protocol may include one or more of: IEEE 802.11a, IEEE 802.11b, IEEE 802.11g, IEEE 802.11n, IEEE 802.11ac, IEEE 802.11ax, IEEE 802.11 be or a future IEEE 802.11 standard.

Networking subsystem 814 includes processors, controllers, radios/antennas, sockets/plugs, and/or other devices used for coupling to, communicating on, and handling data and events for each supported networking system. Note that mechanisms used for coupling to, communicating on, and handling data and events on the network for each network system are sometimes collectively referred to as a 'network interface' for the network system. Moreover, in some embodiments a 'network' or a 'connection' between the electronic devices does not yet exist. Therefore, electronic device 800 may use the mechanisms in networking subsystem 814 for performing simple wireless communication between the electronic devices, e.g., transmitting frames and/or scanning for frames transmitted by other electronic devices.

Within electronic device 800, processing subsystem 810, memory subsystem 812, and networking subsystem 814 are coupled together using bus 828. Bus 828 may include an electrical, optical, and/or electro-optical connection that the subsystems can use to communicate commands and data among one another. Although only one bus 828 is shown for clarity, different embodiments can include a different number or configuration of electrical, optical, and/or electro-optical connections among the subsystems.

In some embodiments, electronic device 800 includes a display subsystem 826 for displaying information on a display, which may include a display driver and the display, such as a liquid-crystal display, a multi-touch touchscreen, etc.

Moreover, electronic device 800 may include a power subsystem 830. This power subsystem 830 may include a dynamic PSU (such as PSU 400 in FIG. 4).

Electronic device 800 can be (or can be included in) any electronic device with at least one network interface. For example, electronic device 800 can be (or can be included in): a desktop computer, a laptop computer, a subnotebook/netbook, a server, a computer, a mainframe computer, a cloud-based computer, a tablet computer, a smartphone, a cellular telephone, a smartwatch, a wearable device, a consumer-electronic device, a portable computing device, an access point, a transceiver, a controller, a radio node, a router, a switch, communication equipment, a wireless dongle, test equipment, and/or another electronic device.

Although specific components are used to describe electronic device 800, in alternative embodiments, different components and/or subsystems may be present in electronic device 800. For example, electronic device 800 may include one or more additional processing subsystems, memory subsystems, networking subsystems, and/or display subsystems. Additionally, one or more of the subsystems may not be present in electronic device 800. Moreover, in some embodiments, electronic device 800 may include one or more additional subsystems that are not shown in FIG. 8. Also, although separate subsystems are shown in FIG. 8, in some embodiments some or all of a given subsystem or component can be integrated into one or more of the other subsystems or component(s) in electronic device 800. For example, in some embodiments program instructions 822 are included in operating system 824 and/or control logic 816 is included in interface circuit 818.

Moreover, the circuits and components in electronic device 800 may be implemented using any combination of analog and/or digital circuitry, including: bipolar, PMOS and/or NMOS gates or transistors. Furthermore, signals in these embodiments may include digital signals that have approximately discrete values and/or analog signals that have continuous values. Additionally, components and circuits may be single-ended or differential, and power supplies may be unipolar or bipolar.

An integrated circuit may implement some or all of the functionality of one or more components in electronic device 800. For example, the integrated circuit may include hardware and/or software mechanisms that are used for transmitting wireless signals from electronic device 800 and receiving signals at electronic device 800 from other electronic devices. Aside from the mechanisms herein described, radios are generally known in the art and hence are not described in detail. In general, networking subsystem 814 and/or the integrated circuit can include any number of radios. Note that the radios in multiple-radio embodiments function in a similar way to the described single-radio embodiments.

In some embodiments, networking subsystem 814 and/or the integrated circuit include a configuration mechanism (such as one or more hardware and/or software mechanisms) that configures the radio(s) to transmit and/or receive on a given communication channel (e.g., a given carrier frequency). For example, in some embodiments, the configuration mechanism can be used to switch the radio from monitoring and/or transmitting on a given communication channel to monitoring and/or transmitting on a different communication channel. (Note that 'monitoring' as used herein comprises receiving signals from other electronic devices and possibly performing one or more processing operations on the received signals)

In some embodiments, an output of a process for designing the integrated circuit, or a portion of the integrated circuit, which includes one or more of the circuits described herein may be a computer-readable medium such as, for example, a magnetic tape or an optical or magnetic disk. The computer-readable medium may be encoded with data structures or other information describing circuitry that may be physically instantiated as the integrated circuit or the portion of the integrated circuit. Although various formats may be used for such encoding, these data structures are commonly written in: Caltech Intermediate Format (CIF), Calma GDS II Stream Format (GDSII) or Electronic Design Interchange Format (EDIF). Those of skill in the art of integrated circuit design can develop such data structures from schematics of the type detailed above and the corresponding descriptions and encode the data structures on the computer-readable medium. Those of skill in the art of integrated circuit fabrication can use such encoded data to fabricate integrated circuits that include one or more of the circuits described herein.

In general, electronic device 800 may use a wide variety of communication protocols and, more generally, communication techniques. Thus, electronic device 800 may include in a variety of network interfaces.

Furthermore, while some of the operations in the preceding embodiments were implemented in hardware or software, in general the operations in the preceding embodiments can be implemented in a wide variety of configurations and architectures. Therefore, some or all of the operations in the preceding embodiments may be performed in hardware, in software or both. For example, at least some of the operations in the power-supply techniques may be implemented using program instructions 822, operating system 824 (such as a driver for the dynamic PSU in power subsystem 830) or in firmware in in an integrated circuit. Alternatively or additionally, at least some of the operations in the power-supply techniques may be implemented in hardware, such as hardware in the dynamic PSU in power subsystem 830.

In the preceding description, we refer to 'some embodiments.' Note that 'some embodiments' describes a subset of all of the possible embodiments, but does not always specify the same subset of embodiments. Moreover, note that numerical values in the preceding embodiments are illustrative examples of some embodiments. In other embodiments of the power-supply techniques, different numerical values may be used.

The foregoing description is intended to enable any person skilled in the art to make and use the disclosure, and is provided in the context of a particular application and its requirements. Moreover, the foregoing descriptions of embodiments of the present disclosure have been presented for purposes of illustration and description only. They are not intended to be exhaustive or to limit the present disclosure to the forms disclosed. Accordingly, many modifications and variations will be apparent to practitioners skilled in the art, and the general principles defined herein may be applied to other embodiments and applications without departing from the spirit and scope of the present disclosure. Additionally, the discussion of the preceding embodiments is not intended to limit the present disclosure. Thus, the present disclosure is not intended to be limited to the embodiments shown, but is to be accorded the widest scope consistent with the principles and features disclosed herein.

## Claims

1. A power supply unit, PSU (400), comprising:
an input node (410-1) configured to electrically couple to an input power signal;
a bridge circuit (412) electrically coupled to the input node and a primary winding (414) of a transformer (416);
the transformer having the primary winding, a first secondary winding (418-1) and a second secondary winding (418-2);
a first load circuit (420-1) configured to provide a first output rail (422-1) and a second load circuit (420-2) configured to provide a second output rail (422-2), wherein the first load circuit is electrically coupled to the first secondary winding and the second load circuit is electrically coupled to the second secondary winding;
a control node (424) configured to receive a control signal; and
a control circuit (426), electrically coupled to the control node, the first load circuit and the second load circuit, configured to dynamically adjust power configurations of the first load circuit and the second load circuit, wherein a given power configuration specifies a given output power rating of a given output rail of a given load circuit.

2. The PSU of claim 1, wherein the PSU has a combined output power rating, and a sum of a first output power rating of the first load circuit and a second output power rating of the second load circuit is less than or equal to the combined output power rating.

3. The PSU of claim 2, wherein the first output power rating is adjusted in a first range of output powers, the second output rating is adjusted in a second range of output powers, and the first range of output powers, at least in part, overlaps with the second range of output powers.

4. The PSU of claim 2 or 3, wherein the control signal specifies the first output power rating and the second output power rating.

5. The PSU of any of claims 2 to 4, wherein the control signal specifies the combined output power rating.

6. The PSU of any of claims 1 to 5, wherein the control signal is associated with a processor (810).

7. The PSU of any of claims 1 to 6, wherein the control signal is associated with: a resistive divider, a fuse, an adjustable pull-up or a pull-down circuit, or a fixed strapping circuit.

8. The PSU of any of claims 1 to 7, wherein the PSU comprises:
a first output circuit (428-1), electrically coupled to the first output rail, configured to monitor an electrical parameter corresponding to a first output power of the first output rail and to limit the first output power to be less than a first maximum output power rating; and
a second output circuit (428-2), electrically coupled to the second output rail, configured to monitor an electrical parameter corresponding to a second output power of the second output rail and to limit the second output power to be less than a second maximum output power rating.

9. A method (600) for dynamically allocating power for different output rails, comprising:
by a power supply unit, PSU (400):
receiving (610) an input power signal;
providing (612) a first portion of the input power signal to a first load circuit (420-1) and a second portion of the input power signal to a second load circuit (420-2);
outputting (614) a first output rail (422-1) using the first load circuit and outputting a second output rail (422-2) using the second load circuit;
receiving (616) a control signal; and
dynamically adjusting (618), using a control circuit (426), power configurations of the first load circuit and the second load circuit, wherein a given power configuration specifies a given output power rating of a given output rail of a given load circuit.

10. An electronic device (900), comprising:
a power supply unit, PSU (400), wherein the PSU comprises:
an input node (410-1) configured to electrically couple to an input power signal;
a bridge circuit (412) electrically coupled to the input node and a primary winding (414) of a transformer (416);
the transformer having the primary winding, a first secondary winding (418-1) and a second secondary winding (418-2);
a first load circuit (420-1) configured to provide a first output rail (422-1) and a second load circuit (420-2) configured to provide a second output rail (422-2), wherein the first load circuit is electrically coupled to the first secondary winding and the second load circuit is electrically coupled to the second secondary winding;
a control node (424) configured to receive a control signal; and
a control circuit (426), electrically coupled to the control node, the first load circuit and the second load circuit, configured to dynamically adjust power configurations of the first load circuit and the second load circuit, wherein a given power configuration specifies a given output power rating of a given output rail of a given load circuit.

11. The electronic of claim 10, wherein the PSU has a combined output power rating, and a sum of a first output power rating of the first load circuit and a second output power rating of the second load circuit is less than or equal to the combined output power rating.

12. The electronic of claim 11, wherein the first output power rating is adjusted in a first range of output powers, the second output rating is adjusted in a second range of output powers, and the first range of output powers, at least in part, overlaps with the second range of output powers.

13. The electronic of claim 11 or 12, wherein the control signal specifies the first output power rating and the second output power rating.

14. The electronic of any of claims 11 to 13, wherein the control signal specifies the combined output power rating.

15. The electronic of any of claims 10 to 14, wherein the control signal is associated with one of: a processor (810), a resistive divider, a fuse, an adjustable pull-up or a pull-down circuit, or a fixed strapping circuit.
